# EUROPEAN PATENT SPECIFICATION

(11) **EP 4 349 430 B1**
(45) Date of publication and mention of the grant of the patent: **02.09.2026**
(21) Application number: 21944066.6
(22) Date of filing: 31.05.2021
(51) Int. Cl.: A63B 47/02, A63B 71/02, A63B 102/32, A01D 51/00

(54) **COLLECTING MACHINE**
SAMMELMASCHINE
MACHINE DE COLLECTE

(43) Date of publication of application: 10.04.2024
(73) Proprietor: Yamabiko Corporation, Ohme-shi Tokyo 198-8760 (JP)
(72) Inventor: NAKANO Kenji, Ohme-shi, Tokyo 198-8760 (JP)
(74) Representative: Dehns
(86) International application number: PCT/JP2021/020759
(87) International publication number: WO 2022/254558

(56) References cited:
- CN-B- 103 830 890
- CN-U- 201 823 250
- CN-U- 206 167 802
- CN-U- 206 934 647
- CN-U- 207 000 216
- CN-U- 208 877 850
- CN-U- 210 186 376
- JP-A- 2020 174 955
- JP-A- 2020 174 955
- JP-A- H08 276 037
- JP-U- 3 014 060
- US-A1- 2009 137 348
- US-A1- 2009 137 348

## Description

### TECHNICAL FIELD

The present invention relates to a collector.

### BACKGROUND ART

Some collectors for collecting balls (collection targets) scattered on a ground of a golf practice range have a main body in which a battery to supply electric power to a motor for driving wheels, a collection device to pick up balls off the ground, and a collection container to accommodate and carry the collected balls are disposed in a distributed manner (see Patent Literature 1, for example).

CN 103830890 B discloses a remote control drum-type tennis ball picking machine. JP 2020 174955 A discloses a ball collection wheel and a ball collection machine. A ball collection wheel is provided for collecting many balls on a surface by rolling on the surface, and includes annular multiple grooves on an outer circumference of the wheel.

### CITATION LIST

### Patent Literature

Patent Literature 1: Japanese Unexamined Utility Model Application Publication No. Hei 4-80565

### SUMMARY OF INVENTION

### Technical Problems

In the conventional collector described above, the battery, the collection device, and the collection container included in the collector are all heavy. This leads to such a problem that a position of a center of gravity of the whole collector varies easily due to a slope of a ground or the number of balls collected. This makes the collector unstable during travel.

Also, in the conventional collector described above, since the battery, which is one of heavy components, is disposed at a high position on the rear side in a traveling direction ,there is a problem that the collector has low stability in the vertical direction. In particular, when the collector travels on a surface of the ground sloped with respect to a horizontal plane and a front side of the collector is positioned higher than a rear side of the collector, the front side of the collector may lift off the surface of the ground.

The present invention solves the problems described above and is directed to a collector having an excellent weight balance. This results in enhancing stability during travel irrespective of ground conditions and the number of collection targets collected.

### Solution to Problems

To achieve the above-described object, the present invention provides a collector including a main body including: a travel device having front and rear wheels; an electric driving device to drive the travel device; a battery to supply electric power to the driving device; a collection device to pick up a golf ball on a surface of ground; and a collection container to accommodate the golf ball. At least part of the battery and at least part of the collection container are disposed between respective axles for the front and rear wheels. Respective positions of centers of gravity of the battery and the collection container are situated in an area defined between a first tangential line tangent to an upper portion of the front wheel and an upper portion of the rear wheel and a second tangential line tangent to a lower portion of the front wheel and a lower portion of the rear wheel. The battery is accommodated in an upper portion of an inside of the collection container and overlaps with the collection container in a vertical direction. The battery is disposed above a front side of a bottom surface of the collection container inclined such that a rear side of the bottom surface is lower than the front side of the bottom surface. The battery is configured to serve as a balancer and to reduce variation in a position of a center of gravity of the whole collector.

### Advantageous Effects of Invention

In the collector of the present invention, the battery and the collection container are disposed between the axles for the front and rear wheels. This improves the weight balance in a longitudinal (or front-rear) direction. Also, in the collector of the present invention, the positions of the centers of gravity of the battery and the collection container having heavy weights are set near the center of the main body. This reduces variation in the position of the center of gravity due to an increase or decrease in the number of collection targets collected and makes the main body compact in the longitudinal direction. As described above, the collector of the present invention has an excellent weight balance and stability during travel irrespective of ground conditions and the increase or decrease in the number of collection targets collected.

### BRIEF DESCRIPTION OF DRAWINGS

FIG. 1 is a side view showing a collector according to a first embodiment of the present disclosure.
FIG. 2 is a plan view showing the collector according to the first embodiment of the present disclosure.
FIG. 3 is a view showing a modification of the collector according to the first embodiment of the present disclosure and is a plan view of a configuration provided with a plurality of batteries.
FIG. 4 is a side view showing a collector according to a second embodiment of the present disclosure.

### DESCRIPTION OF EMBODIMENTS

Embodiments as examples of the present disclosure will be described in detail with reference to the drawings as appropriate.

Note that, in the description of each embodiment, identical constituent components are denoted by the same reference sign and overlapping description is omitted.

In each of the following embodiments, a configuration of a collector of the present disclosure used in a golf practice range (ball game field) will be described as an example.

### [First Embodiment]

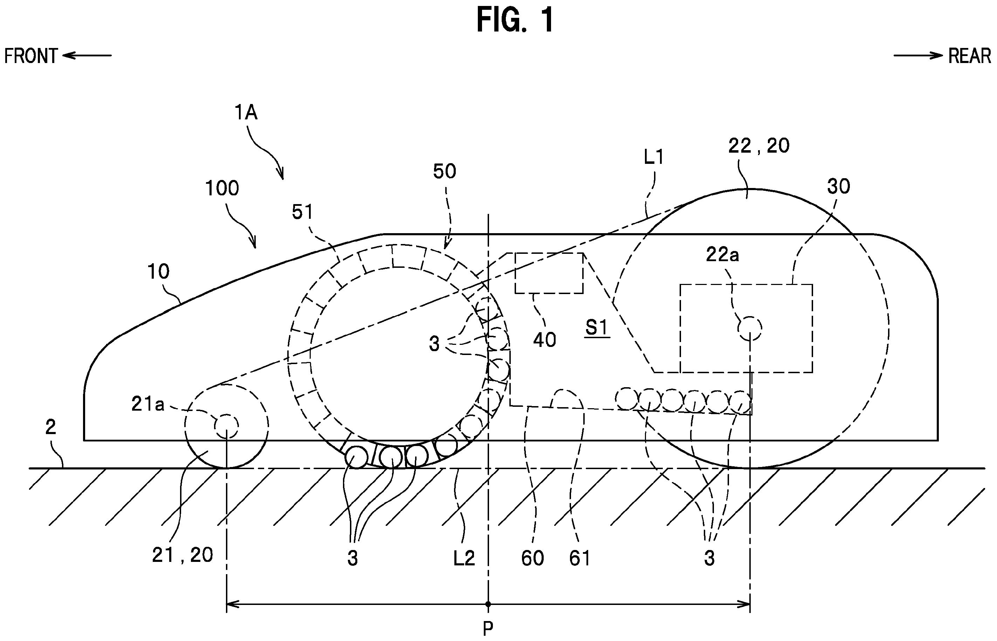

As shown in FIG. 1, a collector 1A of a first embodiment is a vehicle capable of picking up and collecting a plurality of balls 3 as collection targets scattered on a ground 2 while moving on a surface of the ground 2.

The collector 1A includes a main body 100 including a vehicle body 10, a travel device 20, a driving device 30, a battery 40, a collection device 50, and a collection container 60.

The travel device 20 includes front wheels 21 provided at a front side of the vehicle body 10 (front wheel) and rear wheels 22 provided at a rear side of the vehicle body 10 (rear wheel). In the collector 1A of the first embodiment, an outer diameter of the rear wheels 22 is larger than an outer diameter of the front wheels 21.

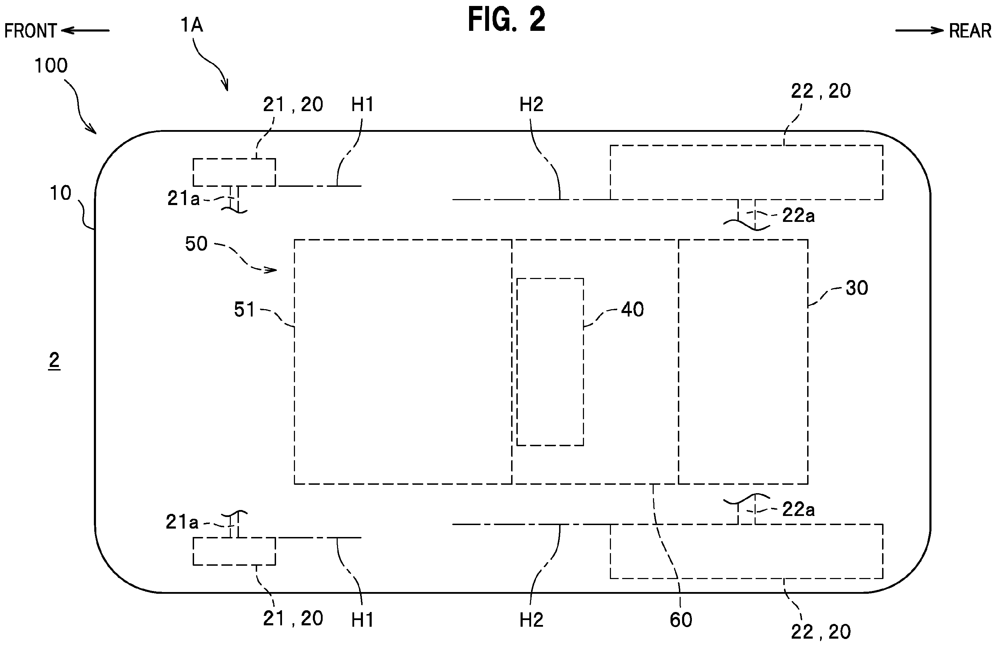

In the first embodiment, as shown in FIG. 2, the two front wheels 21 and 21 are disposed with a distance therebetween in a lateral direction (vehicle width direction). Also, the two rear wheels 22 and 22 are disposed with a distance therebetween in the lateral direction (vehicle width direction).

In the first embodiment, inner ends H2 of the rear wheels 22 are disposed inside of inner ends H1 of the corresponding front wheels 21 in a plan view of the main body 100. Meanwhile, the inner ends H1 of the front wheels 21 and the inner ends H2 of the corresponding rear wheels 22 may be disposed on the same lines, or the inner ends H2 of the rear wheels 22 may be disposed outside of the inner ends H1 of the corresponding front wheels 21.

The driving device 30 is an electrical driving source to operate mechanisms of the collector 1A. The driving device 30 of the first embodiment includes an electric motor. The driving device 30 is driven by electric power supplied from the battery 40.

The driving device 30 of the first embodiment is disposed between the left and right rear wheels 22 and 22 at the rear side of the vehicle body 10.

The driving device 30 of the first embodiment drives the rear wheels 22 and 22. An axle 22a for the rear wheels 22 and 22 is attached to an output part of the driving device 30.

The collector 1A is capable of traveling on the surface of the ground 2 by driving the rear wheels 22 and 22 with the driving device 30.

The collector 1A of the first embodiment is configured to move on the surface of the ground 2 by driving the travel device 20 and the driving device 30 with a controller mounted in the main body 100 or by a remote operation with a transmitter based on positional information from a GNSS (Global Navigation Satellite System), such as GPS or a millimeter-wave radar.

As shown in FIG. 1, in a side view of the main body 100, the collection device 50 is disposed between an axle 21a for the front wheels 21 and the axle 22a for the rear wheels 22.

In the first embodiment, the whole collection device 50 is disposed between the front and rear axles 21a and 22a in the side view of the main body 100. Meanwhile, part of the collection device 50 may be disposed between the front and rear axles 21a and 22a.

The collection device 50 includes a drum 51 that rotates about a shaft extending along the lateral direction (vehicle width direction) and is configured to scoop up the balls 3 on the ground 2 with grooves formed in an outer periphery of the drum 51.

Thus, the collection device 50 is capable of picking up the balls 3 which roll on the surface of the ground 2. The collection device 50 is also capable of picking up the balls 3 even from the surface of the ground 2 that is sloped with respect to a horizontal plane.

In order to increase efficiency of collection of the balls 3, the drum 51 of the collection device 50 is usually made large in diameter and is one of the parts occupying a large volume among the constituent parts of the main body 100. Further, the collection device 50 can be in a state of holding the balls 3 in all of a plurality of collection portions of the drum 51 or in a state of not holding the balls 3 in all of the collection portions. Accordingly, a weight of the collection device 50 varies between a maximum weight at which the collection device 50 holds a maximum number of the balls 3 and a minimum weight at which the collection device 50 holds no ball 3. In other words, the amount of variation in the weight of the collection device 50 alone corresponds to the total weight of the balls 3 that is to be collected in the collection device 50.

Also, the collector 1A is configured such that the collection device 50 stops collecting the balls 3 when the number of the collected balls 3 reaches a maximum amount in the collection container 60 to be described later. Specifically, the collector 1A is configured to raise the drum 51 of the collection device 50 off the surface of the ground 2 and travel without letting the drum 51 touch the balls 3 so that the collection device 50 does not collect the balls 3. Here, the movement of the collection device 50 in a vertical direction may vary a weight balance of the main body 100.

As mentioned above, the weight of the collection device 50 varies according to the number of the balls 3 collected, and the center of gravity of the collection device 50 varies due to its movement in the vertical direction. To reduce such a variation in the weight balance of the main body 100 originating in the collection device 50, at least part of the collection device 50 is desirably disposed between the front and rear axles 21a and 22a. This configuration stabilizes the collector 1A during travel even when the ground 2 is sloped, the number of the balls 3 collected increases or decreases, or the collection device 50 is moved.

The collection container 60 is disposed between the axle 21a for the front wheels 21 and the axle 22a for the rear wheels 22 in the side view of the main body 100.

Moreover, the collection container 60 is disposed between the collection device 50 and the rear wheels 22 in the side view of the main body 100.

In the first embodiment, the whole collection container 60 is disposed between the front and rear axles 21a and 22a in the side view of the main body 100. Meanwhile, part of the collection container 60 may be disposed between the front and rear axles 21a and 22a.

The collection container 60 is a tank capable of accommodating a plurality of the balls 3. The balls 3 taken into the collection device 50 are sent into the collection container 60 from the collection device 50. The collection container 60 is provided with a discharge mechanism to discharge the balls 3 to the outside of the main body 100.

A weight of the collection container 60 varies according to the number of the balls 3 accommodated therein. General self-propelled collection devices are desired to collect as many balls 3 as possible. The weight of the collection container 60 varies greatly within a range from a state of accommodating no ball 3 to a state of accommodating the maximum number of the balls 3. Such a variation in the weight of the collection container 60 may lower the stability of the collector 1A during travel.

To address this, in the collector 1A of the first embodiment, at least part of the collection container 60 is disposed between the front and rear axles 21a and 22a. With this configuration, even when the weight of the collection container 60 varies, the center of gravity of the whole main body 100 is situated between the front and rear axles 21a and 22a. This enhances the stability of the collector 1A during travel.

Further, during travel of the collector 1A, the collection container 60 undergoes a variation in the center of gravity due to the balls 3 rolling inside the collection container 60, in addition to the weight variation in the collection container 60 described above. In particular, when the ground 2 is sloped, the balls 3 moves inside the collection container 60 or some balls 3 unevenly stay at one area of the collection container 60 as the main body 100 is tilted. This may affect the stability of the main body 100.

To address this, the collector 1A of the first embodiment has a bottom surface 61 of the collection container 60 that is inclined such that a rear side of the bottom surface 61 is lower than a front side of the bottom surface 61. Owing to such inclination of the bottom surface 61 of the collection container 60, the balls 3 gather at an area of the bottom surface 61 closer to the ground surface (low area). This inclination prevents the balls 3 stored in the collection container 60 from moving during travel of the collector 1A and makes the center of gravity of the collection container 60 unlikely to vary. An inclination angle of the bottom surface 61 of the collection container 60 is set as appropriate based on a maximum slope angle at which the collector 1A is allowed to travel and use conditions of the collector 1A, so that the balls 3 inside the collection container 60 do not move during travel of the collector 1A.

The battery 40 is disposed between the axle 21a for the front wheels 21 and the axle 22a for the rear wheels 22 in the side view of the main body 100. Moreover, the battery 40 is disposed behind an intermediate position P between the front and rear axles 21a and 22a in the side view of the main body 100.

Furthermore, the battery 40 is disposed between the collection device 50 and the axle 22a for the rear wheels 22 in the side view of the main body 100.

The weight of the battery 40 does not vary between before and after the collector 1A works. In the collector 1A of the first embodiment, the battery 40 having a heavy weight is disposed between the front and rear axles 21a and 22a and is positioned near heavy parts such as the collection container 60. Hence, the position of the center of gravity of the battery 40 is situated between the front and rear axles 21a and 22a, thereby stabilizing the main body 100. In this way, the stability of the collector 1A during travel enhances even when the ground 2 is sloped, the number of the balls 3 collected with the collection device 50 varies, or the number of the balls 3 accommodated in the collection container 60 varies.

In the first embodiment, the whole battery 40 is disposed between the front and rear axles 21a and 22a in the side view of the main body 100. Meanwhile, part of the battery 40 may be disposed between the front and rear axles 21a and 22a.

Also, in the first embodiment, the whole battery 40 is disposed behind the intermediate position P between the front and rear axles 21a and 22a in the side view of the main body 100. Meanwhile, part of the battery 40 may be disposed behind the intermediate position P between the front and rear axles 21a and 22a.

Alternatively, at least part of the battery 40 may be disposed in front of the intermediate position P between the axles 21a and 22a in the side view of the main body 100.

Further, in the first embodiment, the whole battery 40 is disposed between the collection device 50 and the axle 22a in the side view of the main body 100. Meanwhile, part of the battery 40 may be disposed between the collection device 50 and the axle 22a.

The battery 40 is accommodated in an upper portion of the inside of the collection container 60, and the battery 40 and the collection container 60 overlap with each other in the vertical direction. Disposing the battery 40 in this manner makes a vehicle height of the collector 1A low and keeps a posture of the collector 1A from being unstable due to the vehicle height.

The battery 40 is disposed above the front side of the bottom surface 61 of the collection container 60. Specifically, the battery 40 is disposed above the front side of the bottom surface 61 inclined such that the rear side of the bottom surface 61 is lower than the front side of the bottom surface 61. By disposing the battery 40 in this manner, the battery 40, of which the weight and the position of the center of gravity do not vary, serve as a balancer for the collection container 60, of which the weight tends to vary. This reduces variation in the position of the center of gravity of the whole collector 1A.

In the first embodiment, the battery 40 is accommodated in the upper portion of the inside of the collection container 60. Meanwhile, the battery 40 may be disposed outside of the collection container 60.

Also, in the first embodiment, the whole battery 40 overlaps the collection container 60 in the vertical direction. Meanwhile, part of the battery 40 may overlap the collection container 60 in the vertical direction. In this manner, the collection container 60 having large weight variations overlaps at least part of the battery 40 having no weight variation and a stable position of the center of gravity. This overlap disposition reduces variation of the center of gravity of the whole collector 1A, thereby enhancing the stability of the orientation of the collector 1A.

In the collector 1A of the first embodiment, the positions of the centers of gravity of the battery 40 and the collection container 60 are situated in an area S1 defined between a first tangential line L1 tangent to upper portions of the front wheels 21 and upper portions of the rear wheels 22 and a second tangential line L2 tangent to lower portions of the front wheels 21 and lower portions of the rear wheels 22 in the side view of the main body 100. This enhances stability of the collector 1A during travel even when the ground 2 is sloped and makes the main body 100 compact.

In the first embodiment, part of the battery 40 and part of the collection container 60 are disposed in the area S1 in the side view of the main body 100. Meanwhile, the whole battery 40 and the whole collection container 60 may be disposed in the area S1. This makes the collection container 60 not come into contact with the surface of the ground 2 even when the collector 1A overturns due to the slope of the ground 2 being steeper than expected or presence of dents. This dampens the impact on the battery 40 and the collection container 60 and prevents the battery 40 and the collection container 60 from being damaged.

In the collector 1A of the first embodiment, as shown in FIG. 2, at least part of the battery 40 and at least part of the collection container 60 are disposed inside of the inner ends H1 and H1 of the front wheels 21 and 21 and inside of the inner ends H2 and H2 of the rear wheels 22 and 22 in a plan view of the main body 100. With this configuration, the battery 40 and the collection container 60 having heavy weights disposed close to the center of the collector 1A in the lateral direction which is perpendicular to a travel direction. This enhances the stability of the collector 1A during travel.

In the first embodiment, the whole battery 40 and the whole collection container 60 are disposed inside of the inner ends H1 and H1 of the front wheels 21 and 21 and inside of the inner ends H2 and H2 of the rear wheels 22 and 22 in the plan view of the main body 100. Meanwhile, part of the battery 40 and part of the collection container 60 may be disposed inside of the inner ends H1 and H1 of the front wheels 21 and 21 and inside of the inner ends H2 and H2 of the rear wheels 22 and 22.

In the collector 1A as described above, as shown in FIG. 1, the battery 40, the collection container 60, and the collection device 50 are disposed between the front and rear axles 21a and 22a, and the battery 40 is disposed between the collection device 50 and the rear axle 22a.

Also, in the collector 1A of the first embodiment, the positions of the centers of gravity of the battery 40 and the collection container 60 are situated in the area S1 defined between the first tangential line L1 tangent to the upper portions of the front wheels 21 and the upper portions of the rear wheels 22 and the second tangential line L2 tangent to the lower portions of the front wheels 21 and the lower portions of the rear wheels 22.

As described above, disposing the battery 40 and the collection container 60 having heavy weights at a center portion of the main body 100 in the longitudinal direction and the vertical direction improves the weight balance of the main body 100 in the longitudinal direction.

In the collector 1A of the first embodiment, the battery 40 and the collection container 60 overlap with each other in the vertical direction. This reduces variation in the position of the center of gravity due to an increase or decrease in the number of the balls 3 inside the collection container 60 and makes the main body 100 compact in the longitudinal direction.

In the collector 1A of the first embodiment, the battery 40 and the collection container 60 are disposed at the center portion of the main body 100 in the longitudinal direction and the vertical direction. This makes the main body 100 stable even if the battery 40 and the collection container 60 overlap with each other in the vertical direction.

In the collector 1A of the first embodiment, as shown in FIG. 2, the battery 40 and the collection container 60 are disposed inside of the inner ends H1 and H1 of the front wheels 21 and 21 and inside of the inner ends H2 and H2 of the rear wheels 22 and 22 to bring the weight balance of the main body 100 in the lateral direction close to equilibrium.

In the collector 1A of the first embodiment, as shown in FIG. 1, many balls 3 are held in a rear portion of the collection container 60. For this reason, the battery 40 is disposed above the front side of the bottom surface 61 of the collection container 60 to improve the weight balance of the collector 1A during the work of collecting the balls 3.

In the collector 1A of the first embodiment, the rear wheels 22 with a large outer diameter are positioned near the battery 40. This enhances the stability of the main body 100.

The collector 1A of the first embodiment has an excellent weight balance and stability during travel. Accordingly, even when the surface of the ground 2 is sloped with respect to a horizontal plane, the collector 1A is allowed to smoothly travel and collect the balls 3. Moreover, the collector 1A is unlikely to overturn when the front wheel 21 or the rear wheel 22 runs on to the ball 3 or an obstacle.

The first embodiment of the present disclosure has been described above. Meanwhile, the present disclosure is not limited to the first embodiment, and various changes can be made without departing from the object of the present disclosure.

In the collector 1A of the first embodiment, as shown in FIG. 1, the outer diameter of the rear wheels 22 is larger than that of the front wheels 21. Meanwhile, the outer diameter of the front wheels 21 may be larger than that of the rear wheels 22. In this case, at least part of the battery 40 may be disposed in front of the intermediate position P between the axles 21a and 22a in the side view of the main body 100. Also, the outer diameter of the front wheels 21 and the outer diameter of the rear wheels 22 may be equal.

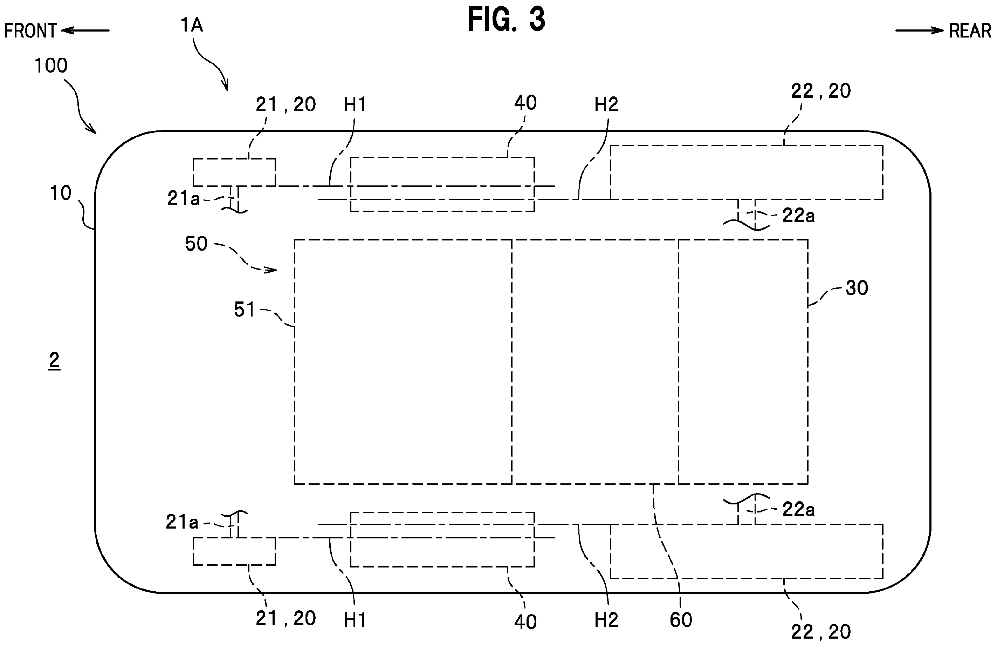

The collector 1A of the first embodiment is provided with the single battery 40. Meanwhile, it may be provided with the multiple batteries 40. For example, as shown in FIG. 3, two batteries 40 and 40 may be provided on left and right sides of the vehicle body 10, respectively. In this case, the batteries 40 and 40 may be at least partly disposed inside of the inner ends H1 and H1 of the front wheels 21 and 21 and inside of the inner ends H2 and H2 of the rear wheels 22 and 22 in a plan view of the main body 100.

In the collector 1A of the first embodiment, as shown in FIG. 1, the bottom surface 61 of the collection container 60 is inclined such that the rear side of the bottom surface 61 is lower than the front side of the bottom surface 61. Alternatively, the bottom surface 61 of the collection container 60 may be inclined such that the front side of the bottom surface 61 is lower than the rear side of the bottom surface 61. In this case, the battery 40 may be disposed above the rear side of the bottom surface 61 of the collection container 60.

As shown in FIG. 2, the travel device 20 of the first embodiment has the left and right front wheels 21 and 21 and the left and right rear wheels 22 and 22. Meanwhile, the configuration of the travel device 20 is not limited. For example, a continuous tracked travel device may be used. Also, in the travel device 20 of the first embodiment, the rear wheels 22 serve as drive wheels and the front wheels 21 serve as steer wheels. Meanwhile, the rear wheels 22 may serve as steer wheels and the front wheels 21 may serve as drive wheels. Moreover, both the front wheels 21 and the rear wheels 22 may be driven.

As shown in FIG. 1, the collector 1A of the first embodiment collects the balls 3 scattered on the ground 2 of a golf course. Meanwhile, collection targets for the collector 1A of the present disclosure are not limited. For example, the collector 1A can also pick up fruits or nuts on a ground of a farmland or a mountain slope.

### [Second Embodiment]

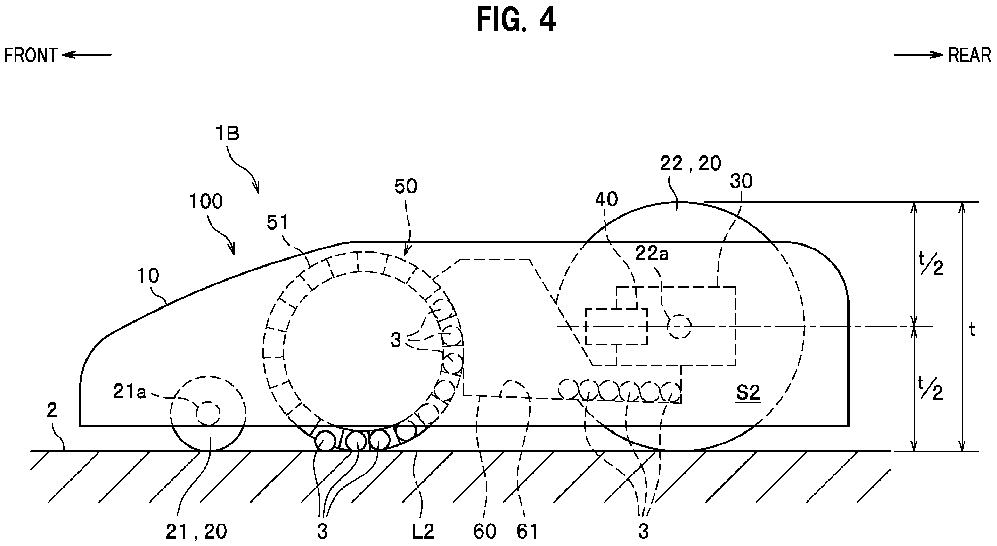

Next, a collector 1B of a second embodiment of the present disclosure will be described. As shown in FIG. 4, a configuration of the collector 1B of the second embodiment is similar to that of the collector 1A of the first embodiment (see FIG. 1), but the position of the battery 40 in the vertical direction is different.

In the collector 1B of the second embodiment, at least part of the battery 40 is disposed in an area S2 with a height less than or equal to a half of a maximum height t of the main body 100.

With this configuration, the battery 40 having a heavy weight is disposed at a low position in the main body 100. This makes the center of gravity of the main body 100 lower, thereby enhancing stability of the collector 1B.

The second embodiment of the present disclosure has been described above. Meanwhile, the present disclosure is not limited to the second embodiment. As with the first embodiment, various changes can be made without departing from the object of the present disclosure.

### Reference Signs List

- 1A: collector (first embodiment)
- 1B: collector (second embodiment)
- 2: ground
- 3: ball
- 10: vehicle body
- 20: travel device
- 21: front wheel
- 21a: axle
- 22: rear wheel
- 22a: axle
- 30: driving device
- 40: battery
- 50: collection device
- 51: drum
- 60: collection container
- 61: bottom surface
- 100: main body
- L1: first tangential line
- L2: second tangential line

## Claims

1. A collector (1A; 1B) comprising a main body (100) comprising:
a travel device (20) including front and rear wheels (21, 22);
an electric driving device (30) to drive the travel device (20);
a battery (40) to supply electric power to the driving device (30);
a collection device (50) to pick up a golf ball (3) on a surface of ground (2); and
a collection container (60) to accommodate the golf ball (3), wherein
at least part of the battery (40) and at least part of the collection container (60) are disposed between respective axles (21a, 22a) for the front and rear wheels (21, 22), and
respective positions of centers of gravity of the battery (40) and the collection container (60) are situated in an area defined between a first tangential line (L1) tangent to an upper portion of the front wheel (21) and an upper portion of the rear wheel (22) and a second tangential line (L2) tangent to a lower portion of the front wheel (21) and a lower portion of the rear wheel (22),
**characterised in that**:
the battery (40) is accommodated in an upper portion of an inside of the collection container (60) and overlaps with the collection container (60) in a vertical direction;
the battery (40) is disposed above a front side of a bottom surface (61) of the collection container (60) inclined such that a rear side of the bottom surface (61) is lower than the front side of the bottom surface (61); and
the battery (40) is configured to serve as a balancer for the collection container (60) and to reduce variation in a position of a center of gravity of the whole collector (1A; 1B).

2. The collector (1A; 1B) according to claim 1, wherein
an outer diameter of one of the front and rear wheels (21, 22) is larger than an outer diameter of the other of the front and rear wheels (21, 22), and
at least part of the battery (40) is disposed in front of or behind an intermediate position between the respective axles (21a, 22a) for the front and rear wheels (21, 22) in a side view of the main body (100).

3. The collector (1B) according to claim 1 or 2, wherein at least part of the battery (40) is disposed in an area with a height less than or equal to a half of a maximum height of the main body (100) in a side view of the main body (100).

4. The collector (1A; 1B) according to any one of claims 1 to 3, wherein at least part of the battery (40) and at least part of the collection container (60) are disposed inside of right and left ends of the travel device (20) in a lateral direction in a plan view of the main body (100).

5. The collector (1A; 1B) according to any one of claims 1 to 4, wherein at least part of the collection device (50) is disposed between the respective axles (21a, 22a) for the front and rear wheels (21, 22) in a side view of the travel device (20).

6. The collector (1A; 1B) according to claim 5, wherein at least part of the battery (40) is disposed between the collection device (50) and the axle (22a) for the rear wheel (22) in a side view of the travel device (20).

## Patentansprüche

1. Sammler (1A; 1B), umfassend einen Hauptkörper (100), umfassend:
eine Fahrvorrichtung (20) einschließend Vorder- und Hinterrädern (21, 22);
eine elektrische Antriebsvorrichtung (30) zum Antreiben der Fahrvorrichtung (20);
eine Batterie (40) zum Liefern elektrischer Leistung an die Antriebsvorrichtung (30);
eine Sammelvorrichtung (50) zum Aufnehmen eines Golfballs (3) auf einer Bodenoberfläche (2); und
einen Sammelbehälter (60) zum Aufnehmen des Golfballs (3), wobei
zumindest ein Teil der Batterie (40) und zumindest ein Teil des Sammelbehälters (60) zwischen jeweiligen Achsen (21a, 22a) für die Vorder- und Hinterräder (21, 22) angeordnet sind, und
jeweilige Positionen von Schwerpunkten der Batterie (40) und des Sammelbehälters (60) in einem Bereich angeordnet sind, der zwischen einer ersten Tangente (L1), die an einen oberen Abschnitt des Vorderrads (21) und einen oberen Abschnitt des Hinterrads (22) tangential ist, und einer zweiten Tangente (L2), die an einen unteren Abschnitt des Vorderrads (21) und einen unteren Abschnitt des Hinterrads (22) tangential ist, definiert ist,
**dadurch gekennzeichnet, dass**
die Batterie (40) in einem oberen Abschnitt eines Inneren des Sammelbehälters (60) aufgenommen ist und den Sammelbehälter (60) in einer Vertikalrichtung überlappt;
die Batterie (40) oberhalb einer Vorderseite einer Bodenfläche (61) des Sammelbehälters (60) angeordnet ist, die derart geneigt ist, dass eine Rückseite der Bodenfläche (61) niedriger ist als die Vorderseite der Bodenfläche (61); und
die Batterie (40) ausgebildet ist, als ein Ausgleichsgewicht für den Sammelbehälter (60) zu dienen und eine Änderung in einer Position eines Schwerpunkts des gesamten Sammlers (1A; 1B) zu verringern.

2. Sammler (1A; 1B) nach Anspruch 1, wobei
ein Außendurchmesser eines der Vorder- und Hinterräder (21, 22) größer ist als ein Außendurchmesser des anderen der Vorder- und Hinterräder (21, 22), und
zumindest ein Teil der Batterie (40) in einer Seitenansicht des Hauptkörpers (100) vor oder hinter einer Zwischenposition zwischen den jeweiligen Achsen (21a, 22a) für die Vorder- und Hinterräder (21, 22) angeordnet ist.

3. Sammler (1B) nach Anspruch 1 oder 2, wobei zumindest ein Teil der Batterie (40) in einem Bereich mit einer Höhe von weniger als oder gleich einer Hälfte einer maximalen Höhe des Hauptkörpers (100) in einer Seitenansicht des Hauptkörpers (100) angeordnet ist.

4. Sammler (1A; 1B) nach einem der Ansprüche 1 bis 3, wobei zumindest ein Teil der Batterie (40) und zumindest ein Teil des Sammelbehälters (60) in einer Draufsicht des Hauptkörpers (100) innerhalb von rechten und linken Enden der Fahrvorrichtung (20) in einer Querrichtung angeordnet sind.

5. Sammler (1A; 1B) nach einem der Ansprüche 1 bis 4, wobei zumindest ein Teil der Sammelvorrichtung (50) zwischen den jeweiligen Achsen (21a, 22a) für die Vorder- und Hinterräder (21, 22) in einer Seitenansicht der Fahrvorrichtung (20) angeordnet ist.

6. Sammler (1A; 1B) nach Anspruch 5, wobei zumindest ein Teil der Batterie (40) zwischen der Sammelvorrichtung (50) und der Achse (22a) für das Hinterrad (22) in einer Seitenansicht der Fahrvorrichtung (20) angeordnet ist.

## Revendications

1. Collecteur (1A ; 1B) comprenant un corps principal (100) comprenant :
un dispositif de déplacement (20) incluant des roues avant et arrière (21, 22) ;
un dispositif d'entraînement (30) électrique pour entraîner le dispositif de déplacement (20) ;
une batterie (40) pour fournir de l'énergie électrique au dispositif d'entraînement (30) ;
un dispositif de collecte (50) pour ramasser une balle de golf (3) sur une surface de sol (2) ; et
un conteneur de collecte (60) pour accueillir la balle de golf (3), dans lequel
au moins une partie de la batterie (40) et au moins une partie du conteneur de collecte (60) sont disposées entre les essieux (21a, 22a) respectifs des roues avant et arrière (21, 22), et
des positions respectives de centres de gravité de la batterie (40) et du conteneur de collecte (60) sont situées dans une zone définie entre une première ligne tangente (L1) tangente à une portion supérieure de la roue avant (21) et à une portion supérieure de la roue arrière (22) et une seconde ligne tangente (L2) tangente à une portion inférieure de la roue avant (21) et à une portion inférieure de la roue arrière (22),
**caractérisé en ce que** :
la batterie (40) est logée dans une portion supérieure d'un intérieur du conteneur de collecte (60) et chevauche le conteneur de collecte (60) dans une direction verticale ;
la batterie (40) est disposée au-dessus d'un côté avant d'une surface de fond (61) du conteneur de collecte (60) inclinée de telle sorte qu'un côté arrière de la surface de fond (61) soit plus bas que le côté avant de la surface de fond (61) ; et
la batterie (40) est configurée pour servir d'équilibreur pour le conteneur de collecte (60) et pour réduire la variation d'une position d'un centre de gravité du collecteur (1A ; 1B) entier.

2. Collecteur (1A ; 1B) selon la revendication 1, dans lequel
un diamètre extérieur de l'une des roues avant et arrière (21, 22) est plus grand qu'un diamètre extérieur de l'autre des roues avant et arrière (21, 22), et
au moins une partie de la batterie (40) est disposée devant ou derrière une position intermédiaire entre les essieux (21a, 22a) respectifs des roues avant et arrière (21, 22) dans une vue de côté du corps principal (100).

3. Collecteur (1B) selon la revendication 1 ou la revendication 2, dans lequel au moins une partie de la batterie (40) est disposée dans une zone ayant une hauteur inférieure ou égale à une moitié d'une hauteur maximale du corps principal (100) dans une vue de côté du corps principal (100).

4. Collecteur (1A; 1B) selon l'une quelconque des revendications 1 à 3, dans lequel au moins une partie de la batterie (40) et au moins une partie du conteneur de collecte (60) sont disposées à l'intérieur des extrémités droite et gauche du dispositif de déplacement (20) dans une direction latérale dans une vue en plan du corps principal (100).

5. Collecteur (1A; 1B) selon l'une quelconque des revendications 1 à 4, dans lequel au moins une partie du dispositif de collecte (50) est disposée entre les essieux (21a, 22a) respectifs des roues avant et arrière (21, 22) dans une vue de côté du dispositif de déplacement (20).

6. Collecteur (1A ; 1B) selon la revendication 5, dans lequel au moins une partie de la batterie (40) est disposée entre le dispositif de collecte (50) et l'essieu (22a) de la roue arrière (22) dans une vue de côté du dispositif de déplacement (20).
